# FASCICULE DE BREVET EUROPEEN

(11) **EP 1 436 179 B1**
(45) Date de publication et mention de la délivrance du brevet: **09.11.2005**
(21) Numéro de dépôt: 02801357.1
(22) Date de dépôt: 02.10.2002
(51) Int. Cl.: B60S 1/40

(54) **ESSUIE-GLACE DE VEHICULE AUTOMOBILE COMPORTANT UN FERMOIR DE SECURITE**
SCHEIBENWISCHER FÜR KRAFTFAHRZEUG MIT SICHERHEITSHAKEN
MOTOR VEHICLE WINDSCREEN WIPER COMPRISING A SAFETY CLASP

(30) Priorité: 15.10.2001 FR 0113831
(43) Date de publication de la demande: 14.07.2004
(73) Titulaire: VALEO SYSTEMES D'ESSUYAGE, 78321 La Verrière (FR)
(72) Inventeur: POTON, Eric, F-63430 Pont du Château (FR)
(86) Numéro de dépôt international: PCT/FR2002/003350
(87) Numéro de publication internationale: WO 2003/033316

(56) Documents cités:
- FR-A- 2 740 090
- GB-A- 2 324 463
- GB-A- 2 348 118

## Description

L'invention concerne un essuie-glace de véhicule automobile.

L'invention concerne plus particulièrement un essuie-glace de véhicule automobile, du type comportant un balai d'essuie-glace monté articulé autour d'un axe transversal à l'extrémité longitudinale avant d'un bras d'essuie-glace, du type dans lequel un connecteur de montage et d'articulation est interposé entre le bras et un composant du balai, du type dans lequel le connecteur est engagé longitudinalement d'arrière en avant à l'intérieur de l'extrémité avant du bras qui est recourbée longitudinalement vers l'arrière en forme de U, et dans lequel le connecteur comporte au moins un élément déformable élastiquement de blocage du connecteur en position engagée à l'intérieur de l'extrémité avant du bras, et comporte deux flancs longitudinaux et verticaux qui sont prévus pour être reçus entre deux ailes latérales du composant du balai.

Il est connu d'utiliser un tel mode d'assemblage du balai sur le bras (voir par exemple le document DE 19 812 716).

Le connecteur est généralement emboîté élastiquement sur une tige transversale reliant les deux ailes longitudinales du composant de manière à pouvoir pivoter autour de celle-ci, et l'extrémité longitudinale avant du bras est recourbée longitudinalement en forme de U de manière à venir s'engager entre les deux flancs du connecteur, autour d'une âme centrale de forme complémentaire du connecteur.

Le blocage en position du connecteur est, de manière générale, assuré par un élément déformable élastiquement. Or, il se peut que sous l'effet d'un choc, le balai soit poussé violemment. L'élément de blocage n'est pas suffisamment résistant et se déforme. Il ne peut plus assurer sa fonction de blocage, permettant alors un désengagement accidentel du connecteur, et par la même occasion, une désolidarisation du balai d'avec le bras d'essuyage.

Selon une conception visant à réaliser des essuie-glace de faible hauteur, la structure articulée du balai d'essuie-glace qui porte la raclette ou lame d'essuyage est supprimée et ce sont par exemple les vertèbres, ou des éléments de renfort structurels analogues aux vertèbres, qui sont associées à la lame d'essuyage souple pour constituer le balai d'essuie-glace proprement dit, aussi appelé "flat-blade".

Ce balai de faible hauteur est lui aussi entraîné en balayage par un mécanisme adéquat comportant un bras d'essuie-glace, et étant donnée la faible hauteur des éléments structurels, le connecteur est emboîté sur la tige d'un composant qui est une pièce rapporté montée sur la structure du balai.

Il existe de nombreux modes de réalisation de pièces rapportées, comme par exemple ceux décrits et représentés dans le document WO-A-00/21811. Cependant, chacune de ces pièces rapportées ne peut recevoir qu'un profil particulier de bras d'essuie-glace qui lui est adapté.

Ainsi, lorsque l'on désire monter un balai d'essuie-glace du type "flat-blade" sur un véhicule conventionnel qui comporte un bras d'essuie-glace standard, ce montage est impossible ou tout au moins nécessite un ensemble spécifique de montage et d'articulation dont tous les composants sont spécifiques.

L'invention a donc pour objet de proposer un moyen de fixation du connecteur sur un composant du balai qui permette de verrouiller le connecteur en position montée et qui permette de monter tout type d'essuie-glace sur un bras et un connecteur standards.

Dans ce but, l'invention propose un essuie-glace du type décrit précédemment, caractérisé en ce qu'il comporte un fermoir de sécurité monté mobile entre une position fermée dans laquelle il s'étend en regard de l'élément de blocage pour empêcher sa déformation élastique et verrouiller le connecteur en position engagée dans le bras, et une position ouverte permettant le désengagement du connecteur hors de l'extrémité en forme de crochet du bras.

Selon d'autres caractéristiques de l'invention :
- le fermoir est monté mobile par rapport au composant du balai ;
- le fermoir est monté articulé par rapport au composant du balai ;
- le fermoir est monté articulé autour d'un axe sensiblement vertical du composant du balai ;
- l'axe d'articulation du fermoir est situé à proximité de l'extrémité longitudinale avant d'une aile du composant ;
- le maintien en position fermée du fermoir est assuré par emboîtement élastique de formes complémentaires ;
- l'élément de blocage est une patte qui s'étend librement et longitudinalement vers l'avant à partir de l'extrémité longitudinale avant d'un flanc du connecteur, et dont l'extrémité libre comporte un bec de blocage qui s'étend transversalement vers l'intérieur du connecteur et qui s'étend en regard de la face avant de l'extrémité longitudinale avant du bras lorsque le connecteur est en position engagée ;
- le fermoir forme un capuchon qui s'étend en regard, et en position fermée, d'une face latérale extérieure de l'extrémité libre de la patte de blocage du connecteur ;
- le composant est une pièce rapportée montée sur une structure de support de la lame d'essuyage du balai ;
- le composant est un tronçon de l'étrier principal d'une structure articulée de support de la lame d'essuyage du balai ;
- l'une des ailes du composant du balai reçoit sur une face extérieure un témoin de vieillissement du balai qui est initialement recouvert par une pellicule de protection qui est ôtée, au moins partiellement, automatiquement, lors de l'ouverture du fermoir.

D'autres caractéristiques et avantages de l'invention apparaîtront à la lecture de la description détaillée qui suit pour la compréhension de laquelle on se reportera aux figures annexées parmi lesquelles :
- la figure 1 est une vue en perspective d'un essuie glace conforme à l'invention dans lequel le fermoir est en position ouverte ;
- la figure 2 est une vue en perspective similaire à celle de figure 1, dans laquelle le fermoir est en position fermée ;

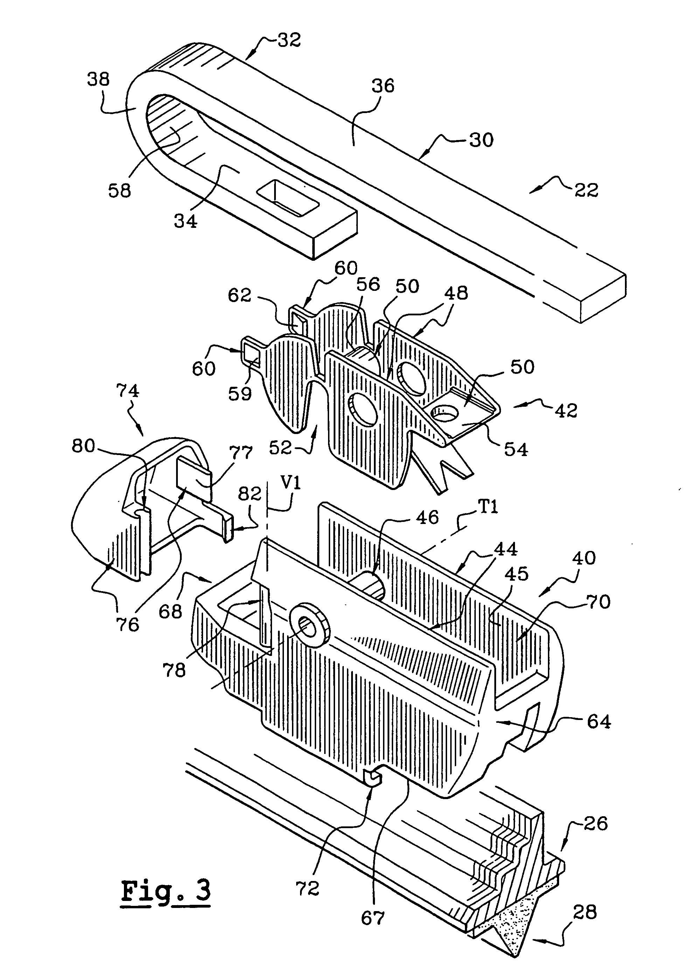

- la figure 3 est une vue en perspective éclatée de l'essuie-glace ;
- la figure 4 est une section longitudinale de l'essuie-glace conforme à l'invention suivant un plan horizontal montrant le blocage du connecteur en position engagée à l'intérieur du bras ;
- la figure 5 est une section similaire à celle de la figure 4, dans laquelle le fermoir est en position fermée.

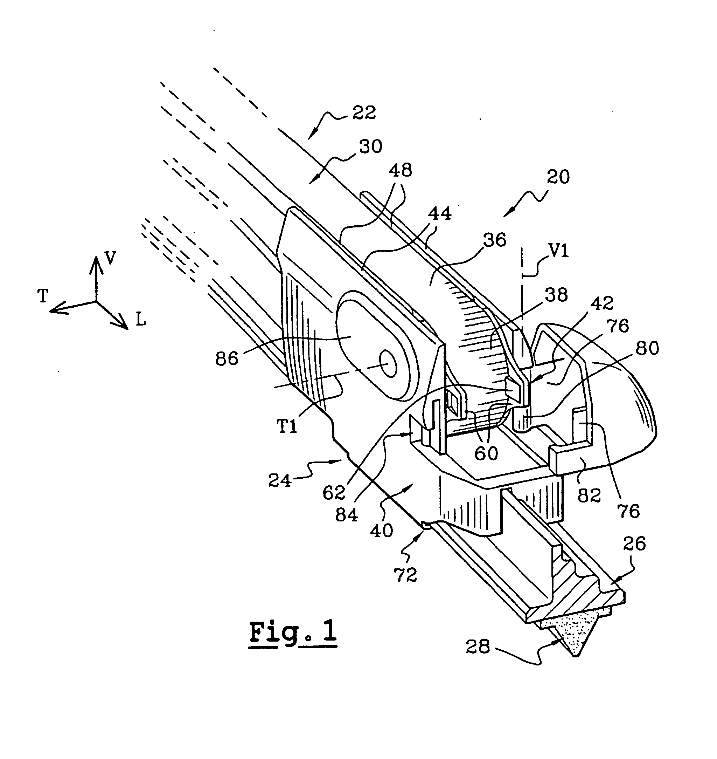

Pour la description de l'invention, on adoptera à titre non limitatif les orientations verticale, longitudinale et transversale selon le repère V, L, T indiqué à la figure 1.

Dans la description qui va suivre, des éléments identiques, similaires ou analogues seront désignés par les mêmes chiffres de référence.

Comme on pourra le constater notamment sur les figures, les principaux éléments et composants de l'essuie-glace présentent une symétrie générale de conception par rapport à un plan longitudinal et vertical médian, des éléments symétriques étant désignés par les mêmes références.

Les figures représentent les principaux composants un essuie-glace 20 réalisé conformément aux enseignements de l'invention.

L'essuie-glace 20 comporte principalement un bras 22, et un balai 24 constitué notamment d'une structure de support 26, et d'une raclette d'essuyage 28.

Le bras d'essuie-glace 22 est constitué par une tige métallique plate 30 qui s'étend selon la direction longitudinale "L" générale du bras 22 et du balai d'essuie-glace 24. L'extrémité libre avant 32 du bras 22 est en forme de crochet coudé en U et est constituée par une branche longitudinale inférieure 34, par une branche longitudinale supérieure 36 et par une branche courbe de raccordement 38 qui s'étend sensiblement sur un demi-cercle.

Le balai 24 est ici un balai d'essuie-glace du type "flat-blade", c'est à dire un balai d'essuie glace de faible hauteur. La structure de support 26 a pour fonction, d'une part, de plaquer la raclette d'essuyage 28 contre la vitre à essuyer et, d'autre part, de l'entraîner en balayage alterné entre deux positions extrêmes de balayage afin d'essuyer la vitre.

La structure de support 26 porte un composant 40 de liaison qui reçoit des moyens de liaison et d'articulation sur l'extrémité 32 du bras 22 autour d'un axe transversal "T1" de type connu qui sont constitués principalement d'un connecteur 42.

Le composant 40, qui sera décrit plus loin de manière détaillée, comporte principalement deux ailes 44 longitudinales et verticales reliées par une tige d'articulation transversale 46.

Le connecteur 42 comporte essentiellement deux flancs latéraux parallèles 48 reliés entre eux par une âme transversale 50. Il est destiné à être reçu entre les deux faces internes 45 des ailes 44 du composant 40 du balai d'essuie-glace 24, et à s'emboîter élastiquement sur la tige d'articulation 46.

A cet effet, le connecteur 42 comporte dans chacun de ses flancs 48 une fente 52, sensiblement verticale et agencée sensiblement au centre du connecteur 42.

Ainsi, le connecteur est engagé du haut vers le bas, entre les deux ailes 44 du balai d'essuie-glace 24 jusqu'à ce que la tige d'articulation 46 soit engagée élastiquement au fond des fentes 52 du connecteur 42.

De manière connue, l'âme transversale 50 qui relie les deux flancs parallèles 48 du connecteur 42 présente un profil convexe complémentaire du profil interne concave de l'extrémité 32 en forme de crochet en U du bras d'essuie-glace 22. L'âme comporte une première portion plane horizontale 54 qui s'étend longitudinalement vers l'arrière et une seconde portion avant incurvée 56, destinée à recouvrir au moins partiellement la tige d'articulation 46, et dont la forme est complémentaire de celle de la face interne 58 de la branche courbe 38 du crochet 32.

La tige 46 assure le montage articulé du connecteur 42 par rapport au balai d'essuie-glace 24 autour de l'axe transversal "T1".

Après avoir engagé le connecteur 42 sur la tige 46, l'assemblage du bras d'essuie-glace 22 sur ce sous-ensemble 42, 46 s'effectue, selon une conception connue, en venant engager longitudinalement d'avant en arrière l'extrémité en forme de crochet 32 sur l'âme 50 du connecteur 42, les faces latérales parallèles de la tige 30 étant reçues entre les flancs 48 du connecteur 42.

Dans un tel type d'assemblage, il est prévu des moyens de blocage par emboîtement élastique qui permettent de bloquer longitudinalement le connecteur 42 par rapport au bras 22 lorsque le connecteur 42 est monté en position engagée dans l'extrémité en forme de crochet 32.

Ces moyens de blocage automatique consistent en deux pattes 60 qui sont portées chacune par un flanc 48 du connecteur 42.

Chaque patte 60 s'étend longitudinalement vers l'avant à partir du chant avant du flanc 48 qui la porte. L'extrémité libre 62 de la patte 60 est en forme d'un bec s'étendant transversalement vers l'intérieur du connecteur 42, et qui est destinée à coopérer avec la face convexe de la branche courbe 38 de l'extrémité en forme de crochet 32.

Le composant 40 est une pièce moulée en matière plastique de forme générale parallélépipédique rectangle qui peut être réalisée en une ou deux parties.

Il est constitué de deux ailes latérales parallèles 44, une extrémité arrière 64 et une embase plane 66 horizontale.

La face avant 68 et la face supérieure 70 du composant sont ouvertes afin de permettre le montage du connecteur 42 puis du bras 22.

La face inférieure 67 de l'embase 66 reçoit des moyens de raccordement du composant 40. Ces moyens de raccordement comportent des glissières 72 qui sont destinées à recevoir la structure de support 26 et qui permettent le montage du composant 40 sur la structure de support 26 par un coulissement longitudinal. Les moyens de raccordement comportent aussi des moyens de verrouillage longitudinal du montage (non représentés en détails), comme par exemple un verrouillage par emboîtement élastique de formes complémentaires.

Après avoir mis en place le connecteur 42 dans le composant 40, le connecteur 42 est engagé à l'intérieur de l'extrémité en forme de crochet 32. Lors de l'engagement du connecteur 42, les pattes 60 se déforment élastiquement vers l'extérieur, du fait de la conformation en rampe des faces latérales internes 61 des pattes 60 pour permettre le passage du bras 22, et lorsque le connecteur 42 est engagé dans le bras 22, les pattes 60 reprennent leur état de repos pour assurer le blocage longitudinal du connecteur 42 en position engagée à l'intérieur du crochet 32.

Le connecteur 42 est reçu entre les ailes 44 du composant 40 et les pattes 60 sont situées à l'avant des chants avant des ailes 44, en vue d'éviter que les ailes 44 n'empêchent la déformation des pattes 60 lorsque l'on veut pouvoir démonter le bras 22.

Conformément aux enseignements de l'invention, la face avant 68 du composant 40 est obturée par un fermoir de sécurité 74 formant aussi capuchon d'habillage.

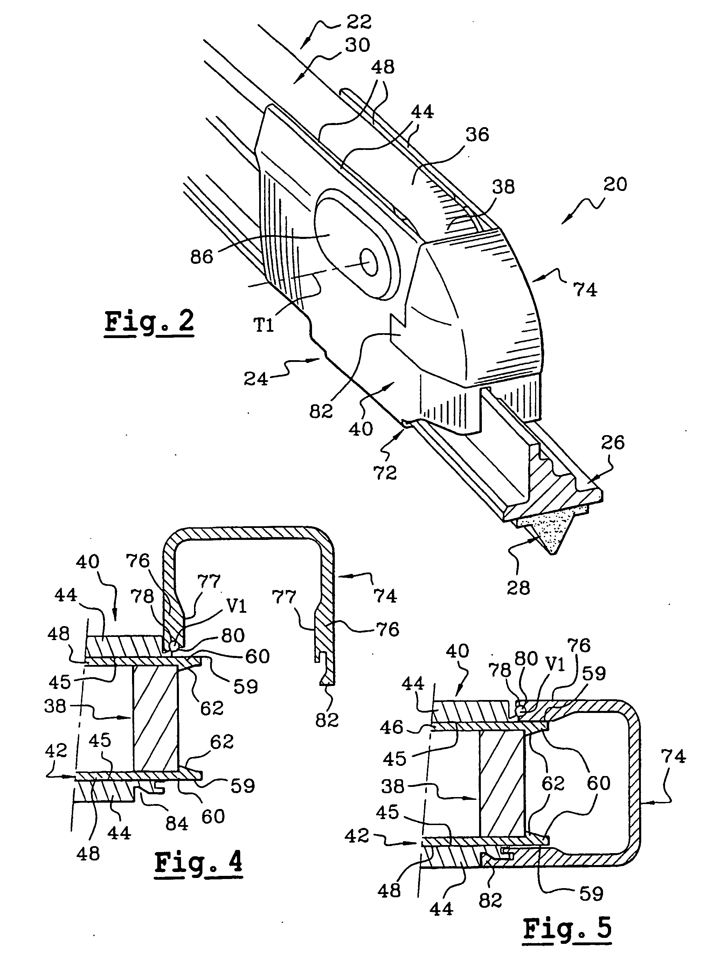

Le fermoir 74 est une pièce creuse moulée en matière plastique en forme de capuchon. Il est articulé autour d'un axe vertical V1 du composant, et il est aussi monté mobile entre une position fermée de verrouillage du blocage du connecteur 42 en position engagée à l'intérieur de l'extrémité en forme de crochet 32 illustré à la figure 2, et une position ouverte permettant le désengagement du connecteur 42.

Le verrouillage du blocage du connecteur 42 est assuré par les faces internes 77 des parois latérales verticales 76 du fermoir 74 qui viennent s'étendre le long des faces latérales extérieures 59 des pattes 60. Ainsi, le fermoir 74 empêche que les pattes 60 soient déformées transversalement vers l'extérieur du connecteur 42, et donc que le connecteur 42 ne puisse être désengagé hors du crochet 32.

Le fermoir 74 participe à l'esthétique et à l'aérodynamique de l'ensemble. A cet effet, lorsque le fermoir 74 est en position fermée, les faces latérales 76 s'étendent dans le prolongement des ailes 44 du composant 40, de sorte que leurs faces latérales extérieures soient affleurantes les unes aux autres.

L'axe "V1" d'articulation du fermoir 74 est situé au niveau du chant avant d'une aile 44 du composant 40. La charnière d'articulation peut est réalisée par un élément cylindrique 78 du composant 40 qui est recouvert par un élément formant crochet 80 du fermoir 74 comportant un évidement complémentaire de l'élément cylindrique 78.

L'immobilisation en position fermée du fermoir 74 est assuré par une patte 82 du fermoir 74. La patte d'immobilisation 82, qui s'étend longitudinalement vers l'arrière depuis le flanc arrière de la paroi latérale 76 opposée à la face latérale 76 recevant l'élément formant crochet 80. La patte 82 vient s'emboîter élastiquement dans un logement 84 de l'aile 44 associée.

Lorsqu'un balai neuf doit être monté sur le bras, le composant 40 du balai 24 usagé n'est pas conservé, mais il est lui aussi remplacé par un composant du balai neuf. Ainsi, chaque composant peut recevoir un témoin permettant de définir quand le balai est usagé. Cet élément se présente de manière générale sous la forme d'une pastille, dite témoin de vieillissement 86, apposée sur une face extérieure d'une aile 44 du composant 40.

Après la mise en place du nouveau balai, il est nécessaire d'ôter une pellicule de protection du témoin afin d'initialiser la détection du vieillissement. On peut ainsi prévoir que le capuchon-fermoir 74 est à l'origine fermé et que son ouverture nécessite d'ôter la pellicule de protection.

L'essuie-glace 20 a été décrit comme comportant un balai 24 du type "flat-blade". Il n'est cependant pas limité à ce mode de réalisation et peut comporter un balai 24 standard du type dans lequel la structure de support 26 comporte un étrier principal qui porte des étriers secondaires. Ainsi, dans le cas d'un balai 24 standard, le composant 40 est un élément de l'étrier principal de la structure de support 26.

Il sera compris que l'invention n'est pas limitée à ce mode de réalisation et que l'on peut utiliser des inversions mécaniques ou des équivalents simples.

Ainsi, le fermoir 74 peut être réalisé venu de matière avec le composant 40. Plus précisément, le chant arrière d'une face latérale 76 du fermoir 74 est relié au chant avant correspondant du composant 40 par une bande de matière de faible épaisseur qui forme une charnière d'articulation d'axe "V1".

L'invention permet donc d'avoir un montage d'essuie-glace modulaire, c'est à dire qu'à partir d'un bras et d'un connecteur standards, il est possible de monter tout type de balai d'essuie-glace muni d'un composant conforme à l'invention, que le balai soit du type "flat-blade" ou non. L'invention permet aussi d'avoir un montage sécurisé sans risque de démontage inopiné du balai.

## Revendications

1. Essuie-glace (20) de véhicule automobile, du type comportant un balai d'essuie-glace (24) monté articulé autour d'un axe transversal (T1) à l'extrémité longitudinale avant d'un bras d'essuie-glace (22), du type dans lequel un connecteur (42) de montage et d'articulation est interposé entre le bras (22) et un composant (40) du balai, du type dans lequel le connecteur (42) est engagé longitudinalement d'arrière en avant à l'intérieur de l'extrémité avant (32) du bras (22) qui est recourbée longitudinalement vers l'arrière en forme de U, et dans lequel le connecteur (42) comporte au moins un élément déformable élastiquement de blocage (60) du connecteur (42) en position engagée à l'intérieur de l'extrémité avant (32) du bras (22), et comporte deux flancs (48) longitudinaux et verticaux qui sont prévus pour être reçus entre deux ailes (44) latérales du composant (40) du balai,
**caractérisé en ce qu'**il comporte un fermoir (74) de sécurité monté mobile entre une position fermée dans laquelle il s'étend en regard de l'élément de blocage (60) pour empêcher sa déformation élastique et verrouiller le connecteur (42) en position engagée dans le bras (22), et une position ouverte permettant le désengagement du connecteur hors du bras (42).

2. Essuie-glace selon la revendication précédente, **caractérisé en ce que** le fermoir (74) est monté mobile par rapport au composant (40) du balai.

3. Essuie-glace selon la revendication 2, **caractérisé en ce que** le fermoir (74) est monté articulé par rapport au composant (40) du balai.

4. Essuie-glace selon la revendication 3, **caractérisé en ce que** le fermoir (74) est monté articulé autour d'un axe (V1) sensiblement vertical du composant (40) du balai.

5. Essuie-glace selon la revendication 4, **caractérisé en ce que** l'axe (V1) d'articulation du fermoir (74) est situé à proximité de l'extrémité longitudinale avant d'une aile (44) du composant.

6. Essuie-glace selon l'une quelconque des revendications 2 à 5, **caractérisé en ce que** le maintien en position fermée du fermoir (74) est assuré par emboîtement élastique de formes complémentaires(82, 84).

7. Essuie-glace selon l'une quelconque des revendications précédentes, **caractérisé en ce que** l'élément de blocage est une patte (60) qui s'étend librement et longitudinalement vers l'avant à partir de l'extrémité longitudinale avant d'un flanc (48) du connecteur (42), et dont l'extrémité libre (62) comporte un bec de blocage qui s'étend transversalement vers l'intérieur du connecteur (42) et qui s'étend en regard de la face avant de l'extrémité longitudinale avant (38) du bras (22) lorsque le connecteur (42) est en position engagée.

8. Essuie-glace selon la revendication 7, **caractérisé en ce que** le fermoir (72) forme un capuchon qui s'étend en regard et en position fermée d'une face latérale extérieure de l'extrémité libre (62) de la patte (60) de blocage du connecteur (42).

9. Essuie-glace selon l'une quelconque des revendications précédentes, **caractérisé en ce que** le composant (40) est une pièce rapportée montée sur une structure de support (26) de la lame d'essuyage du balai (24).

10. Essuie-glace selon l'une quelconque des revendications 1 à 9, **caractérisé en ce que** le composant (40) est un élément de l'étrier principal d'une structure articulée de support (26) de la lame d'essuyage du balai (24).

11. Essuie-glace selon l'une quelconque des revendications précédentes, **caractérisé en ce que** l'une des ailes (44) du composant (40) du balai (24) reçoit sur une face extérieure un témoin de vieillissement du balai (86) qui est initialement recouvert par une pellicule de protection qui est ôtée, au moins partiellement, automatiquement, lors de l'ouverture du fermoir.

## Patentansprüche

1. Scheibenwischer (20) für Kraftfahrzeuge, mit einem Wischerblatt (24), das gelenkig um eine Querachse (T1) am vorderen Längsende eines Wischerarms (22) montiert ist, bei dem zwischen dem Arm (22) und einem Blattbauteil (40) ein Montage- und Gelenkverbindungsstück (42) eingesetzt ist, bei dem das Verbindungsstück (42) von hinten nach vorne in Längsrichtung in das in Längsrichtung U-förmig nach hinten gebogene vordere Ende (32) des Arms (22) eingeführt ist, und bei dem das Verbindungsstück (42) mindestens ein elastisch verformbares Blockierelement (60) des Verbindungsstücks (42) in der in das vordere Ende (32) des Arms (22) eingeführten Position umfasst, mit zwei länglichen und vertikalen Flanken (48) die zwischen zwei seitlichen Flügeln (44) des Blattbauteils (40) aufgenommen werden sollen,
**dadurch gekennzeichnet, dass** er einen Sicherheitsverschluss (74) umfasst, der beweglich montiert ist zwischen einer geschlossenen Position, in der er sich gegenüber dem Blockierelement (60) erstreckt, um seine elastische Verformung zu verhindern und das Verbindungsstück (42) in der in den Arm (22) eingeführten Position zu verriegeln, und einer geöffneten Position, die das Lösen des Verbindungsstücks aus dem Arm (22) ermöglicht.

2. Scheibenwischer gemäß dem vorherigen Anspruch, **dadurch gekennzeichnet, dass** der Verschluss (74) in Bezug auf das Bauteil (40) des Blatts mobil montiert ist.

3. Scheibenwischer gemäß Anspruch 2, **dadurch gekennzeichnet, dass** der Verschluss (74) in Bezug auf das Bauteil (40) des Blatts gelenkig montiert ist.

4. Scheibenwischer gemäß Anspruch 3, **dadurch gekennzeichnet, dass** der Verschluss (74) gelenkig um eine etwa vertikale Achse (V1) des Bauteils (40) des Blatts montiert ist.

5. Scheibenwischer gemäß Anspruch 4, **dadurch gekennzeichnet, dass** sich die Gelenkachse (V1) des Verschlusses (74) in der Nähe des vorderen Längsendes eines Flügels (44) des Bauteils befindet.

6. Scheibenwischer gemäß einem der Ansprüche 2 bis 5, **dadurch gekennzeichnet, dass** der Halt in der geschlossenen Position des Verschlusses (74) durch formschlüssige Einpassung (82, 84) gewährleistet wird.

7. Scheibenwischer gemäß einem der vorangehenden Ansprüche, **dadurch gekennzeichnet, dass** das Blockierelement eine Lasche (60) ist, die sich ab dem vorderen Längsende einer Flanke (48) des Verbindungsstücks (42) frei und in Längsrichtung nach vorne erstreckt und deren freies Ende (62) eine Blockiernase umfasst, die sich quer in das Innere des Verbindungsstücks (42) und, wenn sich das Verbindungsstück (42) in eingeführter Position befindet, gegenüber der Vorderseite des vorderen Längsendes (38) des Arms (22) erstreckt.

8. Scheibenwischer gemäß Anspruch 7, **dadurch gekennzeichnet, dass** der Verschluss (74) eine Kappe bildet, die sich gegenüber, und in geschlossener Position, einer äußeren Seitenfläche des freien Endes (62) der Blockierlasche (60) des Verbindungsstücks (42) erstreckt.

9. Scheibenwischer gemäß einem der vorangehenden Ansprüche, **dadurch gekennzeichnet, dass** das Bauteil (40) ein Anbaustück ist, das auf eine Tragstruktur (26) des Wischgummis des Blatts (24) montiert ist.

10. Scheibenwischer gemäß einem der Ansprüche 1 bis 9, **dadurch gekennzeichnet, dass** das Bauteil (40) ein Element des Hauptbügels einer gelenkigen Tragstruktur (26) des Wischgummis des Blatts (24) ist.

11. Scheibenwischer gemäß einem der vorangehenden Ansprüche, **dadurch gekennzeichnet, dass** einer der Flügel (44) des Bauteils (40) des Blatts (24) an einer Außenseite einen Alterungsanzeiger des Blatts (86) erhält, der ursprünglich von einem Schutzfilm abgedeckt ist, der zumindest teilweise bei der Öffnung des Verschlusses automatisch entfernt wird.

## Claims

1. A windscreen wiper (20) for a car, of the type that comprises a windscreen wiper blade (24) mounted articulated such as to rotate about a transverse axis (T1) on the longitudinal front end of a windscreen wiper arm (22), of the type in which a mounting and articulating connector (42) is placed between the arm (22) and a component (40) of the wiper blade, of the type in which the connector (42) is connected longitudinally from back to front in the inside of the front end (32) of the arm (22), which is curved longitudinally towards the rear in a U shape, and in which the connector (42) comprises at least one element (60) that can be elastically deformed to lock the connector (42) in connected position inside the front end (32) of the arm (22) and comprises two longitudinal vertical sides (48), which are designed to be housed between two lateral leaves (44) of the wiper blade component (40),
**characterised in that** it comprises a safety clasp (74) mounted movable between a closed position in which it extends parallel to the locking element (60) in order to prevent its elastic deformation and to lock the connector (42) in connected position inside the arm (22) and an open position that allows the connector to be released from the arm (22).

2. A windscreen wiper according to the preceding claim, **characterised in that** the clasp (74) is mounted movable in relation to the wiper blade component (40).

3. A windscreen wiper according to claim 2, **characterised in that** the clasp (74) is mounted articulated in relation to the wiper blade component (40).

4. A windscreen wiper according to claim 3, **characterised in that** the clasp (74) is mounted articulated such as to rotate about a substantially vertical axis (V1) of the wiper blade component (40).

5. A windscreen wiper according to claim 4, **characterised in that** the articulation axis (V1) of the clasp (74) is located in the vicinity of the longitudinal front end of a leaf (44) of the component.

6. A windscreen wiper according to any of the claims from 2 to 5, **characterised in that** the clasp (74) is maintained in its closed position by elastic fitting of complementary forms (82, 84).

7. A windscreen wiper according to any of the preceding claims, **characterised in that** the locking element is a tab (60) which extends freely and longitudinally towards the front from the longitudinal front end of a side (48) of the connector (42) and in which the open end (62) comprises a locking nose which extends transversely towards the inside of the connector (42) and which extends parallel to the front face of the longitudinal front end (38) of the arm (22) when the connector (42) is in connected position.

8. A windscreen wiper according to claim 7, **characterised in that** the clasp (72) forms a hood which, in closed position, extends parallel to an external lateral face of the free end (62) of the connector (42) locking tab (60).

9. A windscreen wiper according to any of the preceding claims, **characterised in that** the component (40) is a related part mounted on a support structure (26) of the wiper's wiping blade (24).

10. A windscreen wiper according to any of the claims from 1 to 9, **characterised in that** the component (40) is an element of the main yoke of an articulated support structure (26) of the wiper's wiping blade (24).

11. A windscreen wiper according to any of the preceding claims, **characterised in that** one of the leaves of the component (40) of the wiper blade (24) houses on one if its external faces an aging indicator for the wiper (86), which is initially covered with a protective film which is removed, at least partially, automatically when opening the clasp.
